## Europäisches Patentamt

## European Patent Office

## Office européen des brevets

(19)

(11) **EP 1 055 805 B1**

(12)     **EUROPÄISCHE PATENTSCHRIFT**

(45) Veröffentlichungstag und Bekanntmachung des Hinweises auf die Patenterteilung:
**30.06.2004   Patentblatt 2004/27**

(51) Int Cl.$^7$: **F01N 3/023**, F01N 3/035

(21) Anmeldenummer: **00109755.9**

(22) Anmeldetag: **09.05.2000**

(54) **Verfahren und Vorrichtung zur Entfernung von Russ aus dem Abgas eines Dieselmotors**

Method and arrangement to remove soot from the exhaust gas of a diesel engine

Méthode et dispositif pour retirer les particules de suie des gaz d'echappement d'un moteur diesel

(84) Benannte Vertragsstaaten:
**DE FR GB**

(30) Priorität: **22.05.1999   DE 19923781**

(43) Veröffentlichungstag der Anmeldung:
**29.11.2000   Patentblatt 2000/48**

(73) Patentinhaber: **Umicore AG & Co. KG**
**63457 Hanau-Wolfgang (DE)**

(72) Erfinder:
- **Schäfer-Sindlinger, Adolf, Dr.**
  **60488 Frankfurt (DE)**
- **Strehlau, Wolfgang, Dr.**
  **69221 Dossenheim (DE)**
- **Lox, Egbert, Dr.**
  **63403 Hanau (DE)**

- **Kreuzer, Thomas, Dr.**
  **61184 Karben (DE)**

(74) Vertreter: **Stellbrink, Axel et al**
**Vossius & Partner**
**Siebertstrasse 4**
**81675 München (DE)**

(56) Entgegenhaltungen:
**EP-A- 0 341 832          EP-A- 0 758 713**
**EP-A- 0 835 684          EP-A- 1 057 519**

- **PATENT ABSTRACTS OF JAPAN vol. 1997, no. 07, 31. Juli 1997 (1997-07-31) & JP 09 079024 A (TOYOTA MOTOR CORP), 25. März 1997 (1997-03-25)**

**Beschreibung**

Die Erfindung betrifft ein Verfahren zur Entfernung von Ruß aus dem Abgas eines Dieselmotors durch Oxidation des im Abgas enthaltenen Stickstoffmonoxids zu Stickstoffdioxid, Abtrennen des Rußes aus dem Abgasstrom und Oxidieren des Rußes unter Verwendung des erzeugten Stickstoffdioxids. Die Erfindung ist mit besonderem Vorteil für Dieselmotoren im unteren Leistungsbereich bis 100 kW einsetzbar.

Die für das Jahr 2005 geplanten Grenzwerte in der EU für Dieselfahrzeuge zielen auf die gleichzeitige Verringerung von Stickoxid- und Rußemissionen. Die geplanten Grenzwerte für Fahrzeuge mit einem zulässigem Gesamtgewicht unter 2,5 Tonnen betragen für Stickoxide ($NO_x$) 0,25 g/Km und für Partikel 0,025 g/Km. Durch konstruktive Maßnahmen am Dieselmotor kann nur jeweils eine der beiden Schadstoffkomponenten vermindert werden, während die andere gleichzeitig verstärkt auftritt.

So kann zum Beispiel durch Optimierung der Verbrennung die Emission von Ruß gesenkt werden. Die hierfür notwendigen höheren Verbrennungstemperaturen führen jedoch zu einer verstärkten Bildung von Stickoxiden. Die Stickoxide ihrerseits können durch Maßnahmen wie Abgasrückführung (EGR = Exhaust Gas Recirculation) vermindert werden, was jedoch wiederum die Emission der Partikel erhöht. Der derzeitige Entwicklungsstand von Dieselmotoren für den genannten Anwendungsbereich stellt ein Optimum bezüglich der Emission von Stickoxiden und Ruß dar. Die Emission der Stickoxide liegt bei diesen Motoren im Teillastbereich unterhalb von 100 Vol.-ppm, die der Partikel bei etwa 0,5 g/Km. Der Versuch, eine der beiden Komponenten durch motorische Maßnahmen weiter zu verringern führt automatisch zu einer erhöhten Emission der anderen Schadstoffkomponente.

Die geplanten Abgasgrenzwerte können daher nur durch eine geeignete Abgasnachbehandlung eingehalten werden. Hierbei liegt der Schwerpunkt der Bemühungen auf der Verminderung der Emission von Ruß, da die Stickoxidemissionen moderner Dieselmotoren den geplanten Grenzwerten schon sehr nahe kommen.

Zur effektiven Verminderung der Emission von Ruß werden derzeit hauptsächlich Rußfilter eingesetzt. Weit verbreitet sind hierbei die sogenannten Wandflußfilter, die ähnlich aufgebaut sind wie die bekannten Katalysatortragkörper in Wabenform. Bei den Wandflußfiltern sind die den Wabenkörper durchziehenden Strömungskanäle für das Abgas wechselseitig verschlossen, so daß das Abgas durch die porösen Wände des Filters strömen muß. Solche Wandflußfilter filtern bis zu 95% des Rußes aus dem Abgas heraus.

Mit zunehmender Rußbeladung nimmt der Strömungswiderstand der Filter zu. Die Filter müssen daher durch Verbrennen des Rußes regeneriert werden. Derzeitig übliche Verfahren zur Rußverbrennung nutzen thermische oder katalytische Verfahren oder auch Additive zum Kraftstoff zur kontinuierlichen oder zyklischen Regeneration der Partikelfilter. Zur thermischen Verbrennung des Rußes sind Temperaturen oberhalb von 600°C notwendig. Durch eine katalytische Beschichtung der Filter kann die Zündtemperatur des Rußes erheblich abgesenkt werden.

So beschreibt die DE 3407172 C2 eine Einrichtung zur Reinigung der Abgase von Dieselmotoren, welche in einem Gehäuse unmittelbar oder im Abstand hintereinander Filterelemente enthält, wobei mindestens ein Filterelement A eine die Zündtemperatur des Rußes senkende Beschichtung und mindestens ein Filterelement B eine die Verbrennung gasförmiger Schadstoffe fördernden Katalysator trägt und Filterelemente A und B sich einander mehrfach abwechseln.

Die europäische Anmeldung EP 0 758 713 A1 beschreibt ein Abgasreinigungssystem aus einem Oxidationskatalysator zur Oxidation von Stickstoffmonoxid zu Stickstoffdioxid und einem nachgeschalteten Dieselpartikelfilter. Das vom Oxidationskatalysator erzeugte Stickstoffdioxid verbrennt den auf dem Filter abgelagerten Ruß und wird dabei zu Stickstoffmonoxid reduziert. Nach Verlassen des Dieselpartikelfilters wird das Abgas und das in ihm enthaltene Stickstoffmonoxid über einen Stickoxid-Adsorber geleitet, der das Stickstoffmonoxid aus dem Abgas entfernt. Das Dieselpartikelfilter kann zur Erleichterung der Verbrennung von Ruß mit einem Katalysator zur Oxidation des Rußes beschichtet sein.

Die EP 341832 B1 beschreibt ein Verfahren zur Behandlung des Abgases von Schwerlastwagen. Das Abgas wird zuerst ohne Filtern über einen Katalysator geleitet, um das in ihm enthaltene Stickstoffmonoxid zu Stickstoffdioxid zu oxidieren. Das Stickstoffdioxid enthaltende Abgas wird dann zum Verbrennen der auf einem nachgeschalteten Filter abgelagerten Partikel verwendet, wobei die Menge des Stickstoffdioxids ausreicht, um die Verbrennung der auf dem Filter abgelagerten Teilchen bei einer Temperatur von weniger als 400°C durchzuführen.

Die JP 09079024 offenbart eine Erweiterung des in der EP 341832 B1 beschriebenen Verfahrens. Die Filterung des Rußes wird hierbei auf mehrere Stufen aufgeteilt, wobei jede Stufe einen Katalysator zur Oxidation von Stickstoffmonoxid zu Stickstoffdioxid und ein nachgeschaltetes Rußfilter enthält.

Die EP 835684 A2 beschreibt ein Verfahren zur Behandlung des Abgases von Kleinlast- und Personenkraftwagen. Das Abgas wird gemäß diesem Verfahren über zwei hintereinandergeschaltete Katalysatoren geführt, von denen der erste das im Abgas enthaltene Stickstoffmonoxid zu Stickstoffdioxid oxidiert, welches Rußpartikel, die sich auf dem zweiten Katalysator abgelagert haben zu $CO_2$ oxidiert, wobei Stickstoffdioxid nach folgender Reaktionsgleichung zu Stickstoff reduziert wird:

$$2NO_2 + 2C \rightarrow 2CO_2 + N_2 \qquad\qquad (1)$$

Die WO 99/09307 beschreibt ein Verfahren für die Verminderung der Rußemission von Schwerlastwagen. Gemäß diesem Verfahren wird das Abgas zunächst über einen Katalysator zur Oxidation von Stickstoffmonoxid zu Stickstoffdioxid und anschließend über ein Rußfilter geleitet, auf dem der abgeschiedene Ruß kontinuierlich oxidiert wird. Ein Teil des gereinigten Abgases wird über einen Kühler geleitet und dann der Ansaugluft des Dieselmotors zugemischt.

In der EP-A-1 057 519 wird ein Reinigungssystem für Dieselmotorenabgase. Das system weist einem ersten und einem zweiten Wabenkatalysator, wobei der zweite Wabenkatalysator Stromabwärts in der Stromrichtung des Abgases angeordnet ist. Beide Wabenkatalysatoren enthalten ein Katalysatormaterial zur selektiven Reduktion von Stickstoffoxiden, zur Bildung von Stickstoffdioxid und zur Oxidation von Kohlenwasserstoffen, Kohlenmonoxid und Wasserstoff. Zusätzlich sind Einrichtungen vorgesehen, durch die die Verbrennung von Ruß und die Reduktion von Stickstoffoxiden weiter gefördert werden.

Voraussetzung für das einwandfreie Funktionieren der letzten Verfahren ist das Vorhandensein einer ausreichenden Menge an Stickstoffdioxid, damit eine möglichst vollständige Verbrennung des im Abgas enthaltenen Rußes nach Reaktionsgleichung (1) ablaufen kann.

Moderne Dieselmotoren für Kleinlast- und Personenwagen nutzen jedoch zumeist eine Abgasrückführung (EGR), um die Emission von Stickoxiden möglichst niedrig zu halten. Im Abgas solcher Dieselmotoren werden üblicherweise weniger als 100 Vol.-ppm an Stickoxiden beobachtet. Aufgrund der niedrigen Abgastemperaturen (<250°C), insbesondere von Pkw-Dieselmotoren, ist die Wirksamkeit des Verfahrens zusätzlich eingeschränkt, da selbst mit hohen Stickoxidemissionen keine ausreichenden Mengen an Stickstoffdioxid erzeugt werden können.

Die von modernen Dieselmotoren mit Abgasrückführung emittierten Mengen an Stickoxiden reichen in der Regel nicht aus, um eine vollständige Rußoxidation unter allen Betriebszuständen zu gewährleisten. Außerdem konnten die Erfinder im Teillastbereich von Personenkraftwagen mit Dieselmotoren keine vollständige Stickoxidreduktion gemäß Reaktionsgleichung (1) feststellen. Von einer Abgasreinigungsvorrichtung gemäß EP 835684 A2 wurden etwa soviel Stickoxide emittiert wie in die Vorrichtung eintraten.

Aufgabe der folgenden Erfindung ist es deshalb, ein Verfahren zur Verfügung zu stellen, welches ebenfalls die Rußoxidation mittels Stickstoffdioxid nutzt, jedoch auch bei solchen Dieselmotoren einsetzbar ist, die aufgrund motorischer Maßnahmen nur eine geringe Rohemission an Stickoxiden aufweisen. Ein weiterer Gegenstand der Erfindung ist eine Vorrichtung zur Durchführung des Verfahrens.

Diese Aufgabe wird gelöst durch ein Verfahren zur Entfernung von Ruß aus dem Abgas eines Dieselmotors durch Oxidation des im Abgas enthaltenen Stickstoffmonoxids zu Stickstoffdioxid, Abtrennen des Rußes aus dem Abgasstrom und Oxidieren des Rußes unter Verwendung des erzeugten Stickstoffdioxids, wobei der beschriebene Verfahrensablauf jeweils in wenigstens zwei aufeinanderfolgenden Verfahrensstufen durchgeführt und der Ruß in jeder Verfahrensstufe mit einem Wirkungsgrad W zwischen 0,05 und 0,95 vom Abgasstrom abgetrennt wird, wobei jeder Verfahrensstufe eine Transmission für Ruß gemäß T = 1 - W zugeordnet werden kann und die Gesamttransmission des Verfahrens für Ruß als Produkt der Transmissionen aller Verfahrensstufen gegeben ist. Das Verfahren ist dadurch gekennzeichnet, daß die Oxidation des im Abgas enthaltenen Stickstoffmonoxids zu Stickstoffdioxid sowie Abtrennen und Oxidation der Rußpartikel in den Verfahrensstufen jeweils an einem Filterelement für Ruß vorgenommen wird, welches mit einer Katalysatorbeschichtung zur Oxidation von Stickstoffmonoxid zu Stickstoffdioxid versehen ist.

Als Wirkungsgrad W der Rußabtrennung wird im Rahmen dieser Erfindung die Differenz aus der in eine Verfahrensstufe pro Zeiteinheit eintretenden und der pro Zeiteinheit hindurchtretenden Rußmasse, dividiert durch die pro Zeiteinheit eintretende Rußmasse, verstanden. Dementsprechend handelt es sich bei der Transmission einer Verfahrensstufe für Ruß um den Quotienten aus der pro Zeiteinheit durch die Verfahrensstufe hindurchtretenden Rußmasse zu der in die Verfahrensstufe eintretenden Rußmasse. Der Wirkungsgrad W der Rußabtrennung und die Rußtransmission T einer Verfahrensstufe sind über T = 1 - W miteinander verknüpft.

Die Gesamttransmission $T_g$ aller Verfahrensstufen ergibt sich als Produkt der Transmissionen $T_i$ aller Verfahrensstufen:

$$T_g = \prod_i^n T_i \qquad\qquad (2)$$

$T_g$: Gesamttransmission
$T_i$: Transmission der i-ten Verfahrensstufe
n: Anzahl der Verfahrensstufen

Die Erfindung beruht auf der Beobachtung, daß die Oxidation des Dieselrußes im Teillastbereich von Dieselmotoren überwiegend nicht nach Reaktionsgleichung (1) abläuft, sondern wahrscheinlich nach der folgenden Reaktionsgleichung

$$NO_2 + C \rightarrow CO + NO \qquad (3)$$

$$\text{und } 2CO + O_2 \rightarrow 2CO_2, \qquad (4)$$

da trotz Verminderung des abgetrennten Rußes kein wesentlicher Umsatz der Stickoxide gemessen werden kann.

Stickstoffdioxid wird also unter den Abgasbedingungen, wie sie bei Teillast von Dieselmotoren vorliegen, bei der Oxidation von Rußpartikeln gemäß Reaktionsgleichung (3) überwiegend nur zu Stickstoffmonoxid reduziert.

Da der geringe Gehalt des Abgases moderner Dieselmotoren an Stickoxiden nicht für die Oxidation aller emittierten Partikel ausreicht, wird daher erfindungsgemäß die Abtrennung der Rußpartikel auf mehrere Verfahrensstufen verteilt, wobei der Wirkungsgrad der Abtrennung zwischen 0,05 und 0,95 liegt.

Die Anzahl der anzuwendenden Verfahrensstufen hängt davon ab, welcher Bruchteil des emittierten Rußes mit den im Abgas enthaltenen Stickoxiden oxidiert werden kann. Da das Verhältnis der Stickoxide zu Ruß keine Motorkonstante ist, sondern auch von den jeweiligen Betriebsbedingungen abhängt, stellt die Festlegung der Anzahl der Verfahrensstufen einen Kompromiß dar. In der Regel sind 2 bis 4 Verfahrensstufen ausreichend.

Erfindungsgemäß werden in jeder Verfahrensstufe maximal 50% des eintretenden Rußes abgetrennt. Vorteilhafterweise wird die Transmission der ersten Verfahrensstufe so gewählt, daß die abgeschiedene Rußmenge gerade vollständig durch die zu Stickstoffdioxid oxidierten Stickoxide des Abgases verbrannt werden kann. Gemäß Gleichung (3) wird dabei Stickstoffmonoxid zurückgewonnen, welches in der zweiten Verfahrensstufe erneut zu Stickstoffdioxid oxidiert wird, um den in der zweiten Verfahrensstufe abgeschiedenen Ruß zu oxidieren. Stickstoffmonoxid wird also im vorgestellten Verfahren als Sauerstoffüberträger verwendet. Die Oxidation von Kohlenmonoxid nach (4) erfolgt in der jeweils folgenden Verfahrensstufe zusammen mit der Oxidation von Stickstoffmonoxid zu Stickstoffdioxid.

Mit dem erfindungsgemäßen Verfahren wird eine Verminderung der Rußemission auf 30 bis 5% angestrebt, das heißt die Gesamttransmission des Verfahrens, berechnet als Produkt der Transmissionen aller Verfahrensstufen, soll kleiner als 0,3 bis kleiner als 0,05 sein. Um eine optimale Oxidation des Dieselrußes in allen Verfahrensstufen zu gewährleisten, sollte gemäß der vorliegenden Erfindung die Transmission des Dieselrußes in jeder folgenden Verfahrensstufe derart vermindert sein, daß die jeweils abgetrennte Rußmasse in allen Verfahrensstufen annähernd gleich ist. Die Transmissionswerte zweier aufeinanderfolgender Verfahrensstufen $T_i$ und $T_{i+1}$ müssen dann der folgenden Beziehung gehorchen:

$$T_{i+1} = \frac{2T_i - 1}{T_i} \qquad (5)$$

Die Transmission der ersten Verfahrensstufe ergibt sich in diesem Fall zu

$$T_1 = \frac{1}{n}(T_g + n - 1) \qquad (6)$$

Die folgende Tabelle listet die Transmissionswerte in den einzelnen Verfahrensstufen für die Fälle auf, bei denen das Gesamtverfahren sich aus 2, 3 oder 4 Verfahrensstufen zusammensetzt und die Gesamttransmission jeweils den Wert 0,05 aufweist.

Tabelle 1:

| Transmissionswerte | | | | | |
|---|---|---|---|---|---|
| n | $T_1$ | $T_2$ | $T_3$ | $T_4$ | $T_9$ |
| 2 | 0,525 | 0,095 | | | 0,05 |
| 3 | 0,683 | 0,537 | 0,136 | | 0,05 |
| 4 | 0,763 | 0,689 | 0,548 | 0,174 | 0,05 |

Die Transmissionswerte der Tabelle 1 ergeben sich aus der Forderung, daß die in allen Verfahrensstufen abgetrennten Mengen an Ruß gleich groß sein sollen. Für die praktische Umsetzung des Verfahrens dienen die Werte von Tabelle 1 jedoch nur als grobe Richtwerte.

Erfindungsgemäß bilden der Oxidationskatalysator für Stickstoffmonoxid und das Filter ein integrales Bauteil. Zu diesem Zweck kann das Filter aus dem Katalysatormaterial gefertigt sein, zum Beispiel in Form einer Schaumkeramik. Vorteilhafter ist die Beschichtung eines Filters mit einer geeigneten Katalysatorschicht. In dieser Ausführungsform des Verfahrens finden also die Bildung von Stickstoffdioxid, die Abtrennung des Rußes und seine Verbrennung auf dem selben Bauteil statt und laufen zeitlich parallel zueinander ab.

Zur Unterstützung der Rußoxidation können zusätzliche Katalysatorkomponenten verwendet werden, die den Rußabbrand fördern. Diese Katalysatorkomponenten werden in Mischung mit dem Oxidationskatalysator für Stickstoffmonoxid eingesetzt.

Geeignete Katalysatoren für die Oxidation von Stickstoffmonoxid zu Stickstoffdioxid enthalten als katalytisch aktive Komponente bevorzugt Platin auf einem Trägermaterial wie zum Beispiel aktives Aluminiumoxid, Aluminiumsilikat, Titanoxid, Zirkonoxid, Siliziumdioxid und Mischoxide dieser Materialien. Diese Materialien sollten eine spezifische Oberfläche (BET Oberfläche, gemessen nach DIN 66132) von wenigstens 5 $m^2$/g aufweisen, um eine möglichst hochdisperse Abscheidung des Platins auf dieser Oberfläche zu ermöglichen. Zur Stabilisierung gegenüber hohen Abgastemperaturen können diese Materialien mit geeigneten Stabilisatoren dotiert sein, zum Beispiel mit Lanthan- oder Bariumoxid dotiertes γ-Aluminiumoxid. Die Konzentration des Platins auf dem fertigen Katalysator sollte zwischen 0,5 und 5 g pro Liter Katalysatorvolumen liegen, um eine ausreichende Oxidation des Stickstoffmonoxids zu gewährleisten. Die für die Herstellung eines solchen Katalysators einzusetzenden Techniken sind dem Fachmann bekannt.

Als Filterelemente für die Verfahrensstufen eignen sich alle bekannten Filter für Dieselruß, wobei darauf zu achten ist, daß ihre Filterwirkung entsprechend den Anforderungen in den verschiedenen Verfahrensstufen gewählt wird. Die hierfür geeigneten Maßnahmen hängen vom Typ des verwendeten Filters ab. Es eignen sich die bekannten Wandflußfilter, Schaumkeramiken, Draht- oder Fasergeflechte, Kreuzkanalfilter und andere. Schaumkeramiken und Geflechte gehören zur Klasse der sogenannten Tiefenfilter. Ihre Transmission kann zum Beispiel in einfacher Weise durch ihre Länge in Strömungsrichtung des Abgases verändert werden.

Wandflußfilter bestehen aus einem porösen Wabenkörper mit wechselseitig verschlossenen Strömungskanälen, so daß das Abgas beim Durchströmen des Filters durch die porösen Wände der Strömungskanäle hindurchtreten muß. Zur Änderung des Abtrennungswirkungsgrades dieser Filter können sie mit unterschiedlichen Porositäten hergestellt werden. Es besteht auch die Möglichkeit, eine bestimmte Anzahl von Strömungskanälen als Durchgangskanäle ohne Filterwirkung auszuführen, um den Abtrennungswirkungsgrad zu vermindern, beziehungsweise ihre Transmission zu erhöhen.

Die Filter in den verschiedenen Verfahrensstufen können alle vom selben Filtertyp sein. Es können jedoch auch verschiedene Filtertypen kombiniert werden. Dies erleichtert die Realisierung der in den verschiedenen Verfahrensstufen erforderlichen Transmissionswerte.

Katalysatorkomponenten, die die Zündtemperatur des Rußes herabsetzen und damit den Rußabbrand fördern werden zum Beispiel in den deutschen Patentschriften DE 3141713 C2, DE 3232729 C2 und DE 3407172 C2 beschrieben. Geeignet für die Herabsetzung der Zündtemperatur von Dieselruß sind gemäß diesen Schriften Vanadium enthaltende Verbindungen wie Silber-, Lithium-, Natrium-, Kalium- und Cervanadat, Vanadiumpentoxid und/oder Perrhenate des Kaliums oder Silbers.

Das Verfahren eignet sich besonders bei Fahrzeugen mit niedrigen Rohemissionen an Stickoxiden, die schon den gesetzlichen Vorgaben entsprechen. Nach der letzten Verfahrensstufe können die noch vorhandenen Stickoxide daher an die Umwelt abgegeben werden. Alternativ besteht natürlich die Möglichkeit, eine Verfahrensstufe zur Reduktion der verbliebenen Stickoxide anzufügen. Gleichzeitig wird in dieser Stufe auch die Oxidation des restlichen Kohlenmonoxids und eventuell im Abgas noch enthaltener Kohlenwasserstoffe vorgenommen.

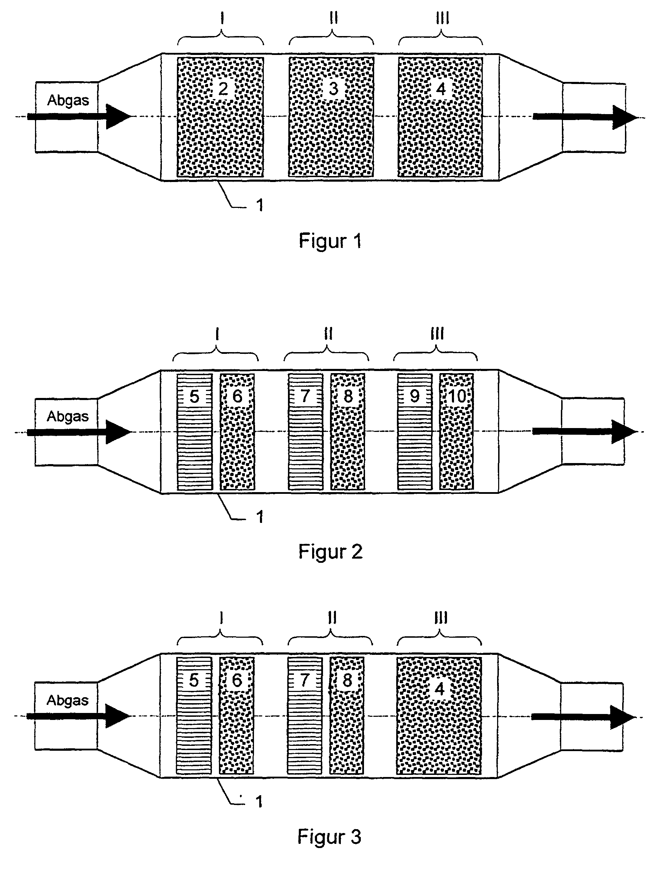

Figur 1 zeigt eine Ausführungsform der Vorrichtung zur Durchführung des erfindungsgemäßen Verfahrens mit jeweils drei Verfahrensstufen I, II und III. Die Figuren 2 und 3 zeigen nicht erfindungsgemäße Vorrichtungen.

Alle drei Figuren zeigen eine Vorrichtung aus einem Konvertergehäuse (1), in dem jeweils drei Behandlungseinheiten für das Abgas angeordnet sind. Die drei Behandlungseinheiten entsprechen den drei Verfahrensstufen I, II und III. In Figur 1 werden die drei Behandlungseinheiten (2), (3) und (4) durch Partikelfilter für Ruß gebildet, die mit einem Katalysator für die Oxidation von Stickstoffmonoxid beschichtet sind. Zur Verminderung der Rußemission auf unter 5% weist das erste Filter (2) gemäß Tabelle 1 eine Transmission von etwa 70%, das zweite Filter (3) eine Transmission von etwa 55% und das dritte Filter (4) eine Transmission von etwa 13% auf.

In der Vorrichtung gemäß Figur 2 bestehen alle Behandlungseinheiten jeweils aus einem Katalysator (5), (7) und (9) in Wabenform und einem Filter für Dieselruß (6), (8) und (10). Während die Katalysatoren keine nennenswerte Filterwirkung aufweisen, müssen die Wirkungsgrade, beziehungsweise die Transmissionswerte, der Filter gemäß Tabelle 1 gewählt werden.

Figur 3 zeigt eine Kombination der Ausführungsformen von Figur 1 und 2. Die ersten beiden Behandlungseinheiten entsprechen den Behandlungseinheiten von Figur 2. Die dritte Behandlungseinheit wird durch ein Filterelement gemäß Figur 1 gebildet.

In den Vorrichtungen gemäß den Figuren 1 bis 3 sind die den einzelnen Verfahrensstufen zugeordneten Behandlungseinheiten in einem gemeinsamen Konvertergehäuse untergebracht. Aus zum Beispiel Gründen der räumlichen Anordnung am Kraftfahrzeug kann für jede Behandlungseinheit ein separates Konvertergehäuse vorgesehen werden. In bestimmten Fällen kann es auch zweckmäßig sein, den Katalysator (5) von Figur 2 in einem separaten Gehäuse motornah anzuordnen, um die Abgaswärme optimal zu nutzen und somit eine bessere Rußoxidation zu erhalten.

**Patentansprüche**

1. Verfahren zur Entfernung von Ruß aus dem Abgas eines Dieselmotors durch Oxidation des im Abgas enthaltenen Stickstoffmonoxids zu Stickstoffdioxid, Abtrennen des Rußes aus dem Abgasstrom und Oxidieren des Rußes unter Verwendung des erzeugten Stickstoffdioxids, wobei der beschriebene Verfahrensablauf jeweils in wenigstens zwei aufeinanderfolgenden Verfahrensstufen (I, II, ...) durchgeführt und der Ruß in jeder Verfahrensstufe mit einem Wirkungsgrad W zwischen 0,05 und 0,95 vom Abgasstrom abgetrennt wird, wobei jeder Verfahrensstufe eine Transmission für Ruß gemäß T= 1 - W zugeordnet werden kann und die Gesamttransmission des Verfahrens für Ruß als Produkt der Transmissionen aller Verfahrensstufen gegeben ist,
**dadurch gekennzeichnet,**
**daß** die Transmission für Ruß in jeder folgenden Verfahrensstufe derart vermindert ist, daß die jeweils abgetrennte Rußmasse in allen Verfahrensstufen annähernd gleich ist.

2. Verfahren nach Anspruch 1,
**dadurch gekennzeichnet,**
**daß** die Oxidation des im Abgas enthaltenen Stickstoffmonoxids zu Stickstoffdioxid, Abtrennen und Oxidation der Rußpartikel in wenigstens einer Verfahrensstufe an einem Filterelement für Ruß vorgenommen wird, welches mit einer Katalysatorbeschichtung zur Oxidation von Stickstoffmonoxid zu Stickstoffdioxid versehen ist.

3. Verfahren nach Anspruch 2,
**dadurch gekennzeichnet,**
**daß** die Katalysatorbeschichtung zusätzlich den Rußabbrand fördernde Komponenten enthält.

4. Verfahren nach Anspruch 1,
**dadurch gekennzeichnet,**
**daß** das Abgas in wenigstens einer Verfahrensstufe über einen Katalysator für die Oxidation von Stickstoffmonoxid zu Stickstoffdioxid und anschließend über ein Filterelement für Ruß geleitet wird, wobei der Katalysator im wesentlichen keine Filterwirkung auf die Rußpartikel ausübt.

5. Verfahren nach Anspruch 4,
**dadurch gekennzeichnet,**
**daß** das Filterelement mit einer den Rußabbrand fördernden Beschichtung versehen ist.

6. Verfahren nach einem der Ansprüche 2 bis 4,
**dadurch gekennzeichnet,**
**daß** als Filterelemente für Ruß Wandflußfilter, Tiefenfilter oder Kreuzkanalfilter verwendet werden.

7. Verfahren nach Anspruch 1,
**dadurch gekennzeichnet,**
**daß** das Abgas nach Durchlaufen der Verfahrensstufen zur Entfernung des Rußes einer weiteren Reinigungsstufe unterworfen wird, in der die noch enthaltenen Stickoxide und restlichen Kohlenwasserstoffe und Kohlenmonoxid entfernt werden.

8. Vorrichtung zur Durchführung des Verfahrens nach Anspruch 1,
**dadurch gekennzeichnet,**
**daß** die Vorrichtung, die wenigstens zwei hinter einander angeordnete Behandlungseinheiten aufweist, zur Durchführung jeder Verfahrensstufe jeweils eine Behandlungseinheit aus einem Katalysator zur Oxidation von Stickstoffmonoxid zu Stickstoffdioxid und einem Filterelement zur Filtration von Dieselruß enthält, wobei die Filterelemente eine Transmission für Dieselruß aufweisen, wobei die Transmission eines Filterelementes gegenüber dem jeweils vorhergehenden Filterelement derart vermindert ist, daß die abgeschiedene Rußmasse auf allen Filterelementen annähernd gleich ist.

9. Vorrichtung nach Anspruch 8,
   **dadurch gekennzeichnet,**
   **daß** als Filterelemente für Ruß Wandflußfilter, Tiefenfilter oder Kreuzkanalfilter verwendet werden.

10. Vorrichtung nach Anspruch 9,
    **dadurch gekennzeichnet,**
    **daß** in wenigstens einer Behandlungseinheit der Katalysator zur Oxidation von Stickstoffmonoxid zu Stickstoffdioxid als Katalysatorbeschichtung auf dem Filterelement aufgebracht ist.

11. Vorrichtung nach Anspruch 10,
    **dadurch gekennzeichnet,**
    **daß** die Katalysatorbeschichtung zusätzlich eine den Rußabbrand fördernde Komponente enthält.

12. Vorrichtung nach Anspruch 9,
    **dadurch gekennzeichnet,**
    **daß** in wenigstens einer Behandlungseinheit hintereinander der Katalysator für die Oxidation von Stickstoffmonoxid zu Stickstoffdioxid und das Filterelement für Ruß angeordnet sind, wobei der Katalysator im wesentlichen keine Filterwirkung auf die Rußpartikel ausübt.

13. Vorrichtung nach Anspruch 12,
    **dadurch gekennzeichnet,**
    **daß** das Filterelement mit einer den Rußabbrand fördernden Beschichtung versehen ist.

14. Vorrichtung nach einem der Ansprüche 9 bis 13,
    **dadurch gekennzeichnet,**
    **daß** die Behandlungseinheiten in einem gemeinsamen Konvertergehäuse angeordnet sind.

15. Vorrichtung nach einem der Ansprüche 9 bis 13,
    **dadurch gekennzeichnet,**
    **daß** wenigsten eine Behandlungseinheit in einem separaten Konvertergehäuse angeordnet ist.

16. Vorrichtung nach Anspruch 9,
    **dadurch gekennzeichnet,**
    **daß** den Behandlungseinheiten aus Katalysatoren und Filterelementen ein Katalysator zur Reduktion von Stickoxiden nachgeschaltet ist.

17. Vorrichtung nach Anspruch 9,
    **dadurch gekennzeichnet,**
    **daß** die Gesamttransmission aller Filterelemente der Vorrichtung für Dieselruß, berechnet als Produkt der Transmissionen aller Filterelemente, kleiner als 0,05 ist.

**Claims**

1. A process for removing soot from the exhaust gas of a diesel engine by oxidising the nitrogen monoxide present in the exhaust gas to nitrogen dioxide, separating the soot from the exhaust gas stream and oxidising the soot using the nitrogen dioxide produced, wherein the procedure described is performed in at least two consecutive process stages (I, II, ...) and the soot is separated from the exhaust gas stream with an efficiency W of between 0.05 and 0.95 in each process stage, wherein each process stage can be assigned a transmission for soot in accordance with $T = 1 - W$ and the total transmission of the process for soot is given as the product of the transmissions of all the process stages,
   **characterised in that**
   the transmission for soot in each of following process stage is reduced such that the weight of soot separated is approximately the same in each of the process stages.

**2.** A process according to Claim 1,
**characterised in that**
oxidation of the nitrogen monoxide present in the exhaust gas to nitrogen dioxide, separation and oxidation of the soot particles is performed in at least one process stage on a filter element for soot which is provided with a catalyst coating for the oxidation of nitrogen monoxide to nitrogen dioxide.

**3.** A process according to Claim 2,
**characterised in that**
the catalyst coating also contains components which promote the combustion of soot.

**4.** A process according to Claim 1,
**characterised in that**
in at least one process stage, the exhaust gas is passed over a catalyst for the oxidation of nitrogen monoxide to nitrogen dioxide and then over a filter element for soot, wherein the catalyst exerts substantially no filtering effect on the soot particles.

**5.** A process according to Claim 4,
**characterised in that**
the filter element is provided with a coating which promotes the combustion of soot.

**6.** A process according to one of Claims 2 to 4,
**characterised in that**
wall-flow filters, deep-bed filters or cross-channel filters are used as filter elements for soot.

**7.** A process according to Claim 1,
**characterised in that**
after passing through the process stages for the removal of soot, the exhaust gas is subjected to a further purification stage in which the nitrogen oxides still present and residual hydrocarbons and carbon monoxide are removed.

**8.** A device for performing the process according to Claim 1,
**characterised in that**
for implementing each process stage, the device, which contains at least two treatment units arranged in sequence, comprises a treatment unit consisting of a catalyst for oxidising nitrogen monoxide to nitrogen dioxide and a filter element for filtering out diesel soot, wherein the filter elements have a transmission for diesel soot, the transmission of one filter element as compared to the respective preceding filter element being reduced such that the weight of soot separated is approximately the same on all filter elements.

**9.** A device according to Claim 8,
**characterised in that**
wall-flow filters, deep-bed filters or cross-channel filters are used as filter elements for soot.

**10.** A device according to Claim 9,
**characterised in that**
in at least one treatment unit, the catalyst for oxidising nitrogen monoxide to nitrogen dioxide is a catalyst coating on the filter element.

**11.** A device according to Claim 10,
**characterised in that**
the catalyst coating is additionally provided with a component that promotes the combustion of soot.

**12.** A device according to Claim 9,
**characterised in that**
in at least one treatment unit, the catalyst for oxidising nitrogen monoxide to nitrogen dioxide and the filter element for soot are arranged in sequence, wherein the catalyst has essentially no filtering effect on the soot particles.

**13.** A device according to Claim 12,
**characterised in that**

the filter element is provided with a coating promoting the combustion of soot.

**14.** A device according to Claims 9 to 13,
**characterised in that**
the treatment units are located in a common converter housing.

**15.** A device according to Claims 9 to 13,
**characterised in that** at least one treatment unit is located in a separate converter housing.

**16.** A device according to Claim 9,
**characterised in that**
a catalyst for reducing nitrogen oxide is located downstream of the treatment units consisting of catalysts and filter elements.

**17.** A device according to Claim 9,
**characterised in that**
the total transmission of all the filter elements in the device for diesel soot, calculated as the product of the transmissions of all the filter elements, is less than 0.05.


**Revendications**

**1.** Procédé pour retirer de la suie des gaz d'échappement d'un moteur diesel par oxydation du monoxyde d'azote contenu dans les gaz d'échappement pour obtenir du dioxyde d'azote, pour séparer la suie du courant des gaz d'échappement et pour oxyder la suie en utilisant le dioxyde d'azote généré, le déroulement décrit du procédé étant réalisé respectivement en au moins deux étapes de procédé successives (I, II, ...) et la suie étant séparée du courant des gaz d'échappement dans chaque étape de procédé avec un rendement W entre 0,05 et 0,95, à chaque étape de procédé une transmission pour les suies selon T = 1 - W pouvant être associée, et la transmission totale du procédé pour les suies étant le produit des transmissions de toutes les étapes de procédé,
**caractérisé en ce que**
la transmission pour les suies est diminuée dans chaque étape de procédé successive de telle sorte que la masse de suies respectivement séparée est approximativement la même dans toutes des étapes de procédé.

**2.** Procédé selon la revendication 1,
**caractérisé en ce que**
l'oxydation du monoxyde d'azote contenu dans les gaz d'échappement en dioxyde d'azote ainsi que la séparation et l'oxydation des particules de suie sont réalisées dans au moins une étape de procédé sur un élément filtrant pour les suies muni d'un revêtement catalyseur pour l'oxydation de monoxyde d'azote en dioxyde d'azote.

**3.** Procédé selon la revendication 2,
**caractérisé en ce que**
le revêtement catalyseur contient en plus des composants favorisant la combustion des suies.

**4.** Procédé selon la revendication 1,
**caractérisé en ce que**
dans au moins une étape de procédé les gaz d'échappement sont conduits sur un catalyseur pour l'oxydation de monoxyde d'azote en dioxyde d'azote puis sur un élément filtrant pour des suies, le catalyseur n'exerçant pour l'essentiel pas d'effet filtrant sur les particules de suie.

**5.** Procédé selon la revendication 4,
**caractérisé en ce que**
l'élément filtrant est muni d'un revêtement favorisant la combustion des suies.

**6.** Procédé selon l'une quelconque des revendications 2 à 4,
**caractérisé en ce qu'**
en tant qu'éléments filtrants pour des suies on utilise des filtres à parois d'écoulement, des filtres à lit profond ou des filtres à canaux croisés.

**7.** Procédé selon la revendication 1,
**caractérisé en ce qu'**
après avoir passé les étapes de procédé pour retirer les suies, les gaz d'échappement sont soumis à une autre étape de nettoyage dans laquelle on retire les oxydes d'azote encore présents ainsi que les hydrocarbures et le monoxyde de carbone résiduels.

**8.** Dispositif pour la mise en oeuvre du procédé selon la revendication 1,
**caractérisé en ce que**
le dispositif, qui présente au moins deux unités de traitement disposées les unes derrière les autres, pour la mise en oeuvre de chaque étape de procédé comprend respectivement une unité de traitement constituée d'un catalyseur pour oxyder du monoxyde d'azote en dioxyde d'azote et un élément filtrant pour la filtration des suies diesel, les éléments filtrants présentant une transmission pour les suies diesel, la transmission d'un élément filtrant par rapport à l'élément filtrant respectivement précédent étant diminuée de telle sorte que la masse de suies séparée est approximativement la même sur tous les éléments filtrants.

**9.** Dispositif selon la revendication 8,
**caractérisé en ce qu'**
en tant qu'éléments filtrants pour des suies on utilise des filtres à parois d'écoulement, des filtres à lit profond ou des filtres à canaux croisés.

**10.** Dispositif selon la revendication 9,
**caractérisé en ce que**
dans au moins une unité de traitement le catalyseur pour oxyder du monoxyde d'azote en dioxyde d'azote est appliqué sur l'élément filtrant sous la forme d'un revêtement catalyseur.

**11.** Dispositif selon la revendication 10,
**caractérisé en ce que**
le revêtement catalyseur contient en plus un composant favorisant la combustion des suies.

**12.** Dispositif selon la revendication 9,
**caractérisé en ce que**
dans au moins une unité de traitement sont disposés l'un derrière l'autre le catalyseur pour oxyder du monoxyde d'azote en dioxyde d'azote et l'élément filtrant pour les suies, le catalyseur n'exerçant pour l'essentiel pas d'effet filtrant sur les particules de suie.

**13.** Dispositif selon la revendication 12,
**caractérisé en ce que**
l'élément filtrant est muni d'un revêtement favorisant la combustion des suies.

**14.** Dispositif selon l'une quelconque des revendications 9 à 13,
**caractérisé en ce que**
les unités de traitement sont disposées dans un carter de convertisseur commun.

**15.** Dispositif selon l'une quelconque des revendications 9 à 13,
**caractérisé en ce qu'**
au moins une unité de traitement est disposée dans un carter de convertisseur séparé.

**16.** Dispositif selon la revendication 9,
**caractérisé en ce qu'**
un catalyseur pour réduire des oxydes d'azote est placé en aval des unités de traitement constituées de catalyseurs et d'éléments filtrants.

**17.** Dispositif selon la revendication 9,
**caractérisé en ce que**
la transmission totale de tous les éléments filtrants du dispositif pour des suies diesel, calculée comme produit des transmissions de tous les éléments filtrants, est inférieure à 0,05.

Figur 1

Figur 2

Figur 3